# FASCICULE DE BREVET EUROPEEN

(11) **EP 1 572 023 B1**
(45) Date de publication et mention de la délivrance du brevet: **09.01.2008**
(21) Numéro de dépôt: 03780244.4
(22) Date de dépôt: 29.10.2003
(51) Int. Cl.: A61C 3/03

(54) **INSTRUMENT DE TRAITEMENT PARONDONTAL**
PARODONTALES BEHANDLUNGSINSTRUMENT
PERIONDONTAL THERAPEUTICAL INSTRUMENT

(30) Priorité: 08.11.2002 FR 0213975
(43) Date de publication de la demande: 14.09.2005
(73) Titulaire: Micro-Mega International Manufactures, Société Anonyme, 25000 Besancon (FR)
(72) Inventeur: BOITEUX, Philippe, F-25610 Arc et Senans (FR); EUVRARD, Hubert, F-25000 Besançon (FR); OUHAYOUN, Jean-Pierre, F-75006 Paris (FR)
(74) Mandataire: Poupon, Michel
(86) Numéro de dépôt international: PCT/FR2003/003218
(87) Numéro de publication internationale: WO 2004/043283

(56) Documents cités:
- EP-B- 0 715 508
- US-A- 5 725 370
- US-B1- 6 176 703
- US-B1- 6 312 256

## Description

La présente invention concerne un instrument de traitement parodontal et plus particulièrement un instrument permettant le détartrage et le surfaçage radiculaire afin de nettoyer les poches parodontales.

On connaît déjà à ce jour de tels instruments qui sont constitués de curettes manuelles ou encore d'inserts montés sur des pièces à main vibrantes. Cependant la rigidité des instruments existants ne permet ni le traitement des poches parodontales ni un bon nettoyage des furcations, contraignant le praticien à pratiquer suivant les méthodes classiques de chirurgie parodontale avec découpe de lambeaux.

On connaît également, notamment par le brevet EP 0 715 508 B1 déposé par la présente demanderesse, un instrument permettant de satisfaire aux inconvénients mentionnés ci-dessus. Cet instrument est constitué d'un manche et d'une lame ; cette dernière possède une partie active présentant deux secteurs répartis le long de la lame, et situés chacun de part et d'autre d'un plan passant par l'axe de la lame. Ces deux secteurs présentant des niveaux d'agressivité différents de telle sorte que, lors du traitement, l'instrument introduit dans la poche parodontale, le secteur le plus agressif entre en contact avec la surface radiculaire de la dent et le moins agressif entre en contact avec la muqueuse. Ladite lame étant, par l'intermédiaire de son manche, maintenue sur une pièce à main lui imprimant un mouvement de vibration permettant aux deux secteurs de réaliser le décollement du tartre à ôter.

Le document, US 6 312 256 B1 décrit un instrument de traitement parodontal avec un canal d'irrigation.

Bien qu un tel instrument donne satisfaction, il continue à faire l'objet de perfectionnements afin d'améliorer le confort pour le patient comme pour le praticien.

A cet effet, la présente invention a pour objet un instrument de traitement parodontal constitué d'une lame rendue solidaire d'une tête destinée à être accouplée à une pièce à main afin d'imprimer à ladite lame un mouvement de vibration, ladite lame possédant sur l'un des côtés délimités par un plan passant par son axe une partie active répartie le long de la lame, ladite lame étant en outre munie d'un canal d'irrigation d'un liquide agencé en son centre, caractérisé en ce que ce canal est débouchant au centre de la partie active de ladite lame sur la majeure partie de sa longueur assurant ainsi d'une part le nettoyage de la partie active de l'outil pendant l'opération et d'autre part l'élimination des particules détachées.

Selon une caractéristique avantageuse de la présente invention, ladite lame est pourvue d'un plan sécant avec ledit canal assurant ainsi l'ouverture du canal sur la partie active et en ce que ce plan d'intersection est incliné par rapport à l'axe et définit la partie active de la lame sur laquelle est agencée de chaque côté de l'ouverture du canal une pluralité de crans ou toute autre forme analogue assurant une rugosité adéquate à son utilisation.

Selon une variante de réalisation, l'extrémité de la lame présente une courbure.

Selon une autre variante de réalisation, l'extrémité de la lame est apte à être courbée par le praticien, pour son adaptation au cas traité, par exemple pour l'accès aux furcations.

Toujours selon l'invention, la lame est montée articulée sur ladite tête, par exemple au moyen d'une articulation du type rotule, offrant ainsi la possibilité d'orienter la position de la partie active de la lame par rapport à la préhension de l'appareil.

Selon une variante de réalisation, l'extrémité opposée à la partie libre de ladite lame est munie d'un moyen de fixation démontable avec la tête.

Selon un mode de réalisation, ce moyen de fixation démontable de la lame est constitué d'une douille manoeuvrable notamment par le praticien sur laquelle est rendue solidaire la lame et en ce que cette douille étant en outre munie d'une gorge annulaire qui, en position de montage sur ladite tête, forme une chambre annulaire étanche assurant la mise en communication entre le canal d'irrigation de la lame et un canal d'acheminement d'un liquide agencé sur la tête.

Selon une autre caractéristique avantageuse de l'invention, ladite tête est pourvue d'un canal d'acheminement d'un liquide qui est associé au canal d'irrigation de la lame.

Selon encore une autre caractéristique avantageuse de l'invention, l'arrivée du liquide est extérieure ou intérieure à la pièce à main.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue de côté d'un instrument selon la présente invention, et
- la figure 2 est une vue similaire à la figure 1 illustrant une variante de réalisation de la présente invention.

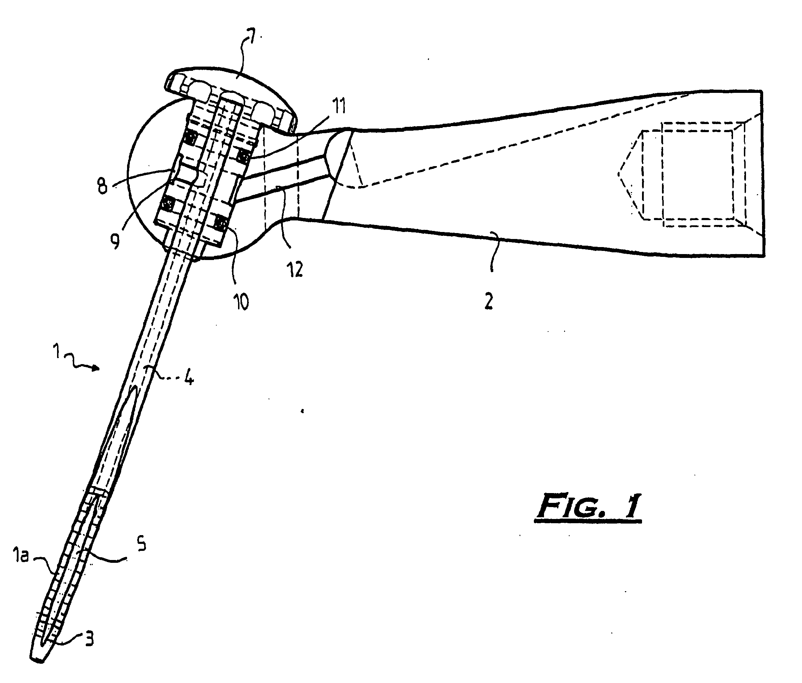

On peut voir à la figure 1, un instrument de chirurgie dentaire en particulier un instrument de traitement parodontal constitué d'une lame 1, également désigné insert, rendue solidaire d'une tête 2 qui est accouplée de manière amovible et interchangeable à une pièce à main (non représentée).

Ladite lame 1 présente, selon le mode de réalisation représenté, une section circulaire et possède sur l'un des côtés délimités par un plan passant par l'axe de la lame une partie active 1a répartie le long de la lame.

Cette partie active 1a est composée d'une pluralité de crans 3 saillant de la lame disposée sur des plans parallèles lui conférant ainsi la rugosité souhaitée. Ainsi, lors du traitement l'instrument étant introduit dans la poche parodontale, la partie active 1a de la lame (c'est-à-dire pourvue d'une surface rugueuse) entre en contact avec la surface radiculaire de la dent et l'autre partie 1b de lame, moins agressive voire lisse entre en contact avec la muqueuse.

On notera que ces plans peuvent être inclinés par rapport au plan perpendiculaire à l'axe de l'instrument afin d'assurer une plus grande efficacité à la lame.

Selon la présente invention, ladite lame 1 est munie d'un canal d'irrigation 4 d'un liquide agencé en son centre, ce canal 4 étant débouchant au centre de la partie active 1a de ladite lame 1 sur la majeure partie de sa longueur assurant ainsi d'une part le nettoyage de la partie active de l'outil pendant l'opération et d'autre part l'élimination des particules détachées, comme explicité plus en détail ci-après.

Selon un mode de réalisation préférentiel de l'invention, afin d'assurer l'ouverture 5 du canal 4 sur la partie active 1a, ladite lame 1 est pourvue d'un plan 6 sécant avec ledit canal 4. Ce plan d'intersection 6 est avantageusement incliné par rapport à l'axe et définit la partie active 1a de la lame 1 sur laquelle est agencée de chaque côté de l'ouverture du canal la pluralité de crans 3 ou toute autre forme analogue assurant une rugosité adéquate à son utilisation.

L'extrémité opposée à la partie libre de ladite lame 1 est munie d'un moyen de fixation démontable avec la tête.

Ce moyen de fixation est constitué selon un mode de réalisation d'une douille 7 manoeuvrable notamment par le praticien sur laquelle est rendue solidaire la lame afin d'assurer son démontage par rapport à la tête et son interchangeabilité.

Cette douille 7 est en outre munie d'une gorge annulaire 8 qui, en position de montage sur ladite tête 2, forme une chambre annulaire 9 rendue étanche par l'agencement de part et d'autre de ladite chambre 9 d'un joint d'étanchéité 10 et 11, comme illustré sur la figure 1.

Cette chambre annulaire 9 assure la mise en communication entre le canal d'irrigation 4 de la lame 1 et un canal d'acheminement 12 d'un liquide du type eau, désinfectant ou tout autre produit destiné principalement à irriguer les tissus lors du traitement, agencé sur la tête 2.

On notera que l'arrivée du liquide peut être extérieure, comme illustré sur la figure 1, à la pièce à main ou intérieure à celle-ci.

Ladite tête 2 est montée de préférence sur un appareil générateur d'ultrasons dont les vibrations ultrasoniques possèdent des propriétés anti-bactériennes intrinsèques. En outre grâce à ces vibrations, ladite lame 1 est en mesure d'atteindre et de limer la dent, sans léser le tissu conjonctif résiduel l'entoure.

L'utilisation de l'instrument de traitement parodontal selon l'invention, ressort déjà de la description ci-dessus.

Le praticien monte l'instrument sur une pièce à main et raccorde le canal d'acheminement 12 d'un liquide à une arrivée puis engage la face de la partie active 1a en contact avec la surface radiculaire de la dent.

La vibration de l'instrument provoque ainsi l'élimination du tissu granulé de la paroi muqueuse de l'alvéole parodontale et le surfaçage radiculaire. L'irrigation directe sur la lame, par l'intermédiaire du canal 4, permet une élimination des débris et donc une meilleure visibilité du champ pour le praticien.

On notera que l'extrémité de la lame 1 peut être pré-courbée ou mise en forme manuellement par le praticien, en fonction de l'anatomie de la dent à soigner permettant en outre de pénétrer les poches de façon atraumatique mais également de nettoyer plus efficacement des surfaces radiculaires plates à l'intérieur d'alvéoles plus amples.

On notera que la longueur de la lame 1 est analogue à celles des limes endodentaires connues c'est-à-dire de l'ordre de 12 à 25 mm et d'une épaisseur de l'ordre de 0,1 à 3 mm.

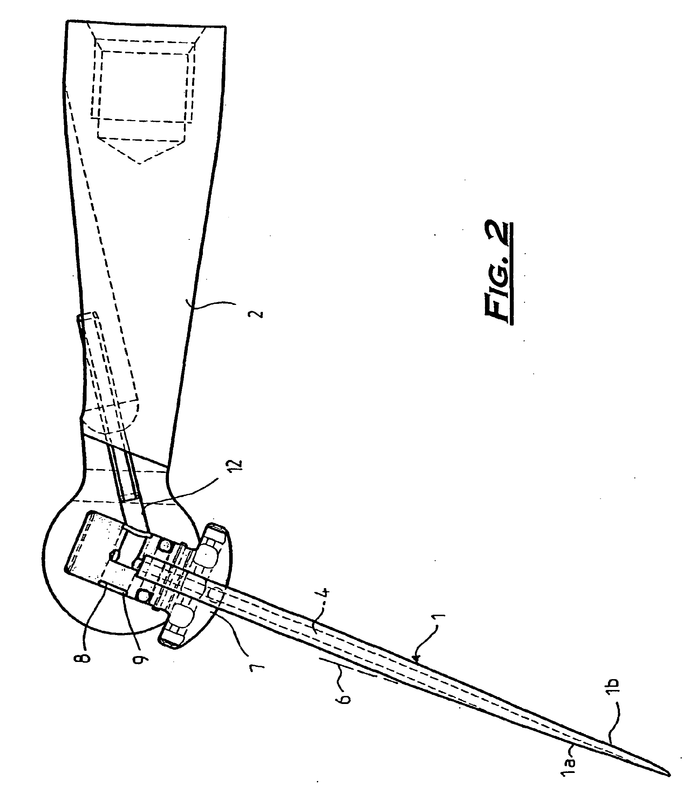

On a représenté à la figure 2, une variante de réalisation de l'instrument de traitement parodontal dans laquelle la douille 7 ne traverse pas ladite tête 2, offrant ainsi l'avantage de réduire le nombre de joints d'étanchéité à un unique joint 13.

Selon une variante de réalisation non représentée, la lame 1 de l'instrument est montée articulée sur la tête, par exemple au moyen d'une articulation du type rotule, offrant ainsi la possibilité d'orienter la position de la partie active de la lame par rapport à la préhension de l'appareil.

On comprend à la lecture de la description ci-dessus que l'instrument de traitement parodontal de la présente invention est relativement simple à réaliser et permet un traitement rapide, et atraumatique pour le patient. En outre, il s'agit d'un instrument qui ne nécessite pas une intervention chirurgicale contrairement aux interventions avec les curettes qui pour les poches parodontales profondes requiert la découpe de lambeaux.

Bien que l'invention ait été décrite en liaison avec deux modes de réalisation particuliers, l'objet de la présente invention n'est pas limité à ces exemples particuliers mais par l'objet de la revendication 1.

Ainsi, par exemple la forme de la lame qui, au lieu de la forme droite optimale, pourrait être resserrée en direction de la pointe pour l'adapter à l'utilisation à l'intérieur d'alvéoles gingivales. De même, la lame 1 peut prendre toute section appropriée, à savoir par exemple elliptique.

De même, on notera que l'instrument de traitement parodontal selon l'invention peut être jetable ou non.

## Revendications

1. Instrument de traitement parodontal constitué d'une lame (1) rendue solidaire d'une tête (2) destinée à être accouplée à une pièce à main afin d'imprimer à ladite lame (1) un mouvement de vibration, ladite lame (1) possédant sur l'un des côtés délimités par un plan passant par son axe une partie active (1a) répartie le long de la lame (1), ladite lame (1) étant outre munie d'un canal d'irrigation (4) d'un liquide agencé en son centre, **caractérisé en ce que** ce canal (4) est débouchant au centre de la partie active (1a) de ladite lame (1) sur la majeure partie de sa longueur assurant ainsi d'une part le nettoyage de la partie active (1a) de l'outil pendant l'opération et d'autre part l'élimination des particules détachées.

2. Instrument de traitement parodontal selon la revendication 1, **caractérisé en ce que** ladite lame (1) est pourvue d'un plan (6) sécant avec ledit canal (4) assurant ainsi l'ouverture (5) du canal (4) sur la partie active (1a) et **en ce que** ce plan d'intersection (6) est incliné par rapport à l'axe et définie la partie active de la lame sur laquelle est agencée de chaque côté de l'ouverture du canal une pluralité de crans (3) ou toute autre forme analogue assurant une rugosité adéquate à son utilisation.

3. Instrument de traitement parodontal selon la revendication 1 ou 2, **caractérisé en ce que** l'extrémité de la lame (1) présente une courbure.

4. Instrument de traitement parodontal selon la revendication 1 ou 2, **caractérisé en ce que** l'extrémité de la lame (1) est apte à être courbée par le praticien.

5. Instrument de traitement parodontal selon l'une quelconque des revendications précédentes, **caractérisé en ce que** la lame (1) est montée articulée sur ladite tête (2), par exemple au moyen d'une articulation du type rotule, offrant ainsi la possibilité d'orienter la position de la partie active (1a) de la lame (1) par rapport à la préhension de l'appareil.

6. Instrument de traitement parodontal selon l'une quelconque des revendications précédentes, **caractérisé en ce que** l'extrémité opposée à la partie libre de ladite lame (1) est munie d'un moyen de fixation démontable avec la tête (2).

7. Instrument de traitement parodontal selon la revendication 6, **caractérisé en ce que** le moyen de fixation démontable de la lame (1) est constitué d'une douille (7) manoeuvrable notamment par le praticien sur laquelle est rendue solidaire la lame (1) et **en ce que** cette douille (7) étant en outre munie d'une gorge annulaire (8) qui, en position de montage sur ladite tête (2), forme une chambre annulaire (9) étanche assurant la mise en communication entre le canal d'irrigation (4) de la lame (1) et un canal d'acheminement (12) d'un liquide agencé sur la tête (2).

8. Instrument de traitement parodontal selon l'une quelconque des revendications 1 à 5, **caractérisé en ce que** ladite tête (2) est pourvue d'un canal d'acheminement (12) d'un liquide qui est associé au canal d'irrigation (4) de la lame (1).

9. Instrument de traitement parodontal selon l'une quelconque des revendications précédentes, **caractérisé en ce que** l'arrivée du liquide est extérieure à la pièce à main.

10. Instrument de traitement parodontal selon l'une quelconque des revendications 1 à 8, **caractérisé en ce que** l'arrivée du liquide est intérieure à la pièce à main.

11. Instrument de traitement parodontal selon l'une quelconque des revendications précédentes, **caractérisé en ce qu'**il est jetable.

## Claims

1. Periodontal treatment instrument comprising a blade (1) secured to a head (2) intended to be coupled with a handpiece in order to transmit vibratory motion to the said blade (1), the said blade (1) having on one of the sides defined by a plane passing through its centre-line an active part (1a) located along the blade (1), the said blade (1) also being provided with an irrigation channel (4) for a liquid situated in its centre, **characterised in that** this channel (4) is open at the centre of the active part (1a) of the said blade (1) on the greater part of its length, thus ensuring, on the one hand, cleaning of the active part (1a) of the tool during operation and, on the other hand, the elimination of detached particles.

2. Periodontal treatment instrument according to Claim 1, **characterized in that** the said blade (1) is provided with a plane (6) cutting the said channel (4) thus ensuring the opening (5) of the channel (4) in the active part (1a), and **in that** this intersection plane (6) is inclined in relation to the centre-line and defines the active part of the blade on which is arranged, on each side of the channel opening, a plurality of notches (3) or any other similar form ensuring roughness suitable for its use.

3. Periodontal treatment instrument according to Claim 1 or 2, **characterized in that** the end of the blade (1) has a curvature.

4. Periodontal treatment instrument according to Claim 1 or 2, **characterized in that** the end of the blade (1) is suitable for being bent by the practitioner.

5. Periodontal treatment instrument according to any one of the preceding claims, **characterized in that** the blade (1) is fitted, articulated, to the said head (2), for example by means of a ball type joint, thus offering the possibility of orienting the position of the active part (1a) of the blade (1) in relation to the equipment grip.

6. Periodontal treatment instrument according to any one of the preceding claims, **characterized in that** the end opposite the free part of the said blade (1) is provided with detachable means of fastening to the head (2).

7. Periodontal treatment instrument according to Claim 6, **characterized in that** the detachable means of fastening the blade (1) comprises a sleeve (7), operable in particular by the practitioner, to which the blade (1) is secured, and **in that** this sleeve (7) being further provided with an annular groove (8) which, in the position when fitted to the said head (2), forms a sealed annular chamber (9) ensuring connection between the irrigation channel (4) of the blade (1) and a conveying channel (12) for a liquid situated on the head (2).

8. Periodontal treatment instrument according to any one of Claims 1 to 5, **characterized in that** the said head (2) is provided with a conveying channel (12) for a liquid which is associated with the irrigation channel (4) in the blade (1).

9. Periodontal treatment instrument according to any one of the preceding claims, **characterized in that** the liquid inlet is outside the handpiece.

10. Periodontal treatment instrument according to any one of Claims 1 to 8, **characterized in that** the liquid inlet is inside the handpiece.

11. Periodontal treatment instrument according to any one of the preceding claims, **characterized in that** it is disposable.

## Patentansprüche

1. Instrument zur Parodontalbehandlung, umfassend eine Schneide (1), die fest mit einem Kopf (2) verbunden ist, der dazu ausersehen ist, an ein Handstück gekuppelt zu werden, um die Schneide (1) in eine Vibrationsbewegung zu versetzten, wobei die Schneide (1) auf einer der Seiten, die durch eine ebene Fläche, welche durch ihre Achse läuft, einen aktiven Abschnitt (1a) aufweist, der entlang der Schneide (1) aufgeteilt ist, wobei die Schneide (1) ferner mit einem Kanal zur Berieselung (4) mit einer Flüssigkeit versehen ist, der in einer Mitte angeordnet ist, **dadurch gekennzeichnet, dass** dieser Kanal (4) in der Mitte des aktiven Abschnitts (1a) der Schneide (1) auf dem Hauptabschnitt seiner Länge einmündet, wodurch einerseits die Reinigung des aktiven Abschnitts (1a) des Werkzeugs während des Vorgangs und andererseits die Beseitigung der gelösten Partikel gewährleistet ist.

2. Instrument zur Parodontalbehandlung nach Anspruch 1, **dadurch gekennzeichnet, dass** die Schneide (1) mit einer schneidenden ebenen Fläche zum Kanal (4) versehen ist, auf diese Weise die Öffnung (5) des Kanals (4) auf dem aktiven Abschnitt (1a) gewährleistend, und **dadurch, dass** diese schneidende Fläche (6) bezogen auf die Achse geneigt ist und den aktiven Abschnitt der Schneide definiert, auf welcher zu jeder Seite der Öffnung des Kanals mehrere Rasten (3) oder jede sonstige ähnlich Form, die eine geeignete Rauheit bei ihrer Verwendung gewährleistet, angeordnet sind.

3. Instrument zur Parodontalbehandlung nach Anspruch 1 oder 2, **dadurch gekennzeichnet, dass** das Ende der Schneide (1) eine Krümmung aufweist.

4. Instrument zur Parodontalbehandlung nach Anspruch 1 oder 2, **dadurch gekennzeichnet, dass** das Ende der Schneide (1) vom praktizierenden Arzt gekrümmt werden kann.

5. Instrument zur Parodontalbehandlung nach einem der vorhergehenden Ansprüche, **dadurch gekennzeichnet, dass** die Schneide (1) gelenkig auf dem Kopf (2) angeordnet ist, beispielsweise mit Hilfe eines Kugelgelenks, das auf diese Weise die Möglichkeit bietet, die Position des aktiven Abschnitts (1a) der Schneide (1) bezogen auf die Handhabbarkeit des Gerätes zu orientieren.

6. Instrument zur Parodontalbehandlung nach einem der vorhergehenden Ansprüche, **dadurch gekennzeichnet, dass** das dem freien Abschnitt der Schneide (1) gegenüberliegende Ende mit einem mit dem Kopf (2) ausbaubaren Befestigungsmittel versehen ist.

7. Instrument zur Parodontalbehandlung nach Anspruch 6, **dadurch gekennzeichnet, dass** das von der Schneide (1) ausbaubare Befestigungsmittel eine Hülse (7) aufweist, die insbesondere durch den praktizierenden Arzt manövrierbar ist, auf welcher die Schneide (1) fest verbunden ist und **dadurch, dass** diese Hülse (7) ferner mit einer ringförmigen Auskehlung (8) versehen ist, die in der Anordnungsposition auf dem Kopf (2) einen dichten ringförmigen Raum (9) bildet, der die Herstellung der Verbindung zwischen dem Kanal zur Berieselung (4) der Schneide (1) und einem Kanal zur Beförderung (12) einer Flüssigkeit, der auf dem Kopf (2) angeordnet ist, gewährleistet.

8. Instrument zur Parodontalbehandlung nach einem der Ansprüche 1 bis 5, **dadurch gekennzeichnet, dass** der Kopf (2) einen Kanal zur Beförderung (12) einer Flüssigkeit, welche mit dem Kanal zur Berieselung (4) des Messers assoziiert ist, aufweist.

9. Instrument zur Parodontalbehandlung nach einem der vorherigen Ansprüche, **dadurch gekennzeichnet, dass** der Einlauf der Flüssigkeit außerhalb des Handstücks ist.

10. Instrument zur Parodontalbehandlung nach einem der Ansprüche 1 bis 8, **dadurch gekennzeichnet, dass** der Einlauf der Flüssigkeit innerhalb des Handstücks ist.

11. Instrument zur Parodontalbehandlung nach einem der vorherigen Ansprüche, **dadurch gekennzeichnet, dass** es wegwerfbar ist.
